# EUROPÄISCHE PATENTANMELDUNG

(11) **EP 2 011 386 A1**
(43) Veröffentlichungstag der Anmeldung: **07.01.2009**
(21) Anmeldenummer: 07111712.1
(22) Anmeldetag: 04.07.2007
(51) Int. Cl.: A01G 13/02, B32B 33/00, C08J 5/18, C09K 5/06, E04B 1/76, F28D 20/02

(54) **Bau-, Teich- und Schwimmbadfolie**

(71) Anmelder: KNAUF GIPS AG, 97346 Iphofen (DE)
(72) Erfinder: Die Erfindernennung liegt noch nicht vor
(74) Vertreter: Schreiber, Christoph

(57) **Zusammenfassung**

Folie enthaltend Bereiche von Latentwärmespeichermaterialien in einer Menge von 1 bis 40 Gew. %.

## Beschreibung

Die vorliegende Erfindung betrifft eine Folie und ihre Verwendung.

Dem Fachmann sind verschiedene Arten von Folien bekannt, die zur Abdeckung von landwirtschaftlichen Flächen, von Pflanzen und ähnlichem eingesetzt werden.

DE 24 50 114 C2 beschreibt transparente Kunststofffolien in Form von Bahnen zum Abdecken von Pflanzkulturen.

Das deutsche Gebrauchsmuster 94 18 837 U1 beschreibt eine Pflanzenschutzhaube aus Kunststoff.

Es besteht jedoch weiterhin ein Bedarf nach Folien mit verbesserten Eigenschaften.

Aufgabe der Erfindung war es daher, solche Folien mit verbesserten Eigenschaften bereitzustellen.

Gelöst wird die Aufgabe durch eine Folie enthaltend Bereiche von Latentwärmespeichermaterialien in einer Menge von 1 bis 40 Gew.-%, d.h. die Folie umfasst neben dem Folienmaterial Bereiche, in denen Latentwärmespeichermaterialien lokalisiert sind. Diese können gleichmäßig in Form einer oder mehrerer Schichten im Material vorliegen. Sie können nur in gleichmäßig verteilten Bereichen vorliegen oder eine anisotrope Verteilung aufweisen. Der Anteil der Latentwärmespeichermaterialien beträgt 1 bis 40 Gew.-%, vorzugsweise 5 bis 15 Gew.-%, jeweils bezogen auf das Gesamtgewicht von der Folie inklusive Latentwärmespeichermaterialien.

Latentwärmespeichermaterialien sind dem Fachmann bekannt. Üblicherweise handelt es sich lipophile Materialien, die im gewünschten Temperaturbereich (zwischen minimal -20°C und maximal 120°C) eine Fest-/Flüssigphasenumwandlung zeigen.

Grundsätzlich geeignete Latentwärmespeichermaterialien sind beispielsweise
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan,Cyclodecan;
- aromatische Kohlenwasserstoffverbindungen wie Benzol, Naphthalin, Biphenyl, o- oder n-Terphenyl, C₁-C₄₀-alkyl-substituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl-oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Latentwärmespeichermaterialen auf Basis von Paraffinen werden besonders bevorzugt.

In einer Ausführungsform der Erfindung liegen die Latentwärmespeichermaterialien verkapselt vor, d.h. die Latentwärmespeichermaterialien sind umhüllt und werden dann in die Folie eingebracht.

Die WO 2003/016650, auf die vollinhaltlich Bezug genommen wird, beschreibt unter anderem Verfahren zur Herstellung von verkapselten Latentwärmespeichermaterialien.

In typischen Herstellungswegen wird die einzukapselnde, lipophile Substanz (das Latentwärmespeichermaterial) zusammen mit Monomeren, einem Radikalstarter und einem Schutzkolloid in eine stabile Öl-in-Wasser-Emulsion gebracht. Durch Auslösung der Polymerisolation entstehen Polymere, die die lipophilen Substanzen umschließen. Wege hierzu sind beispielsweise auch in der EP 0 457 154 A1 beschrieben.

Geeignete Kapselhüllen sind beispielsweise aus (Meth)-Acrylsäureesterpolyme-ren.

Abhängig vom gewünschten Einsatz und der Dicke der Folien liegen die Kapselgrößen im Bereich von 1 bis 5000 µm, wobei bevorzugte Bereiche 5 bis 100 µm, besonders bevorzugt 10 bis 50 µm sind

In einer Ausführungsform kann es so sein, dass größere Bereiche von Latentwärmespeichermaterialien in einer Folie eingeschweißt sind. Es ist jedoch auch möglich, in solchen Bereichen mikroverkapselte Latentwärmespeichermaterialen einzusetzen.

In einer besonders bevorzugten Ausführungsform umfasst die Folie mindestens zwei Schichten, wobei die Latentwärmespeichermaterialien zwischen den Schichten liegen.

Geeignete Dicken für die Folie liegen im Bereich von 8 bis 80 µm, wobei Dicken von 10 bis 25 µm bevorzugt sind. Weist die Folie zwei oder mehr Schichten auf, so hat jede einzelne Schicht eine Dicke von bevorzugt etwa 3 bis 7 µm.

Als Folienmaterialien eignen sich grundsätzlich alle Kunststoffmaterialien, die auch heute für Folien eingesetzt werden, beispielsweise Polyolefine, Polyvinylchloride, Polyamide und Polyvinylacetate.

In einer bevorzugten Ausführungsform ist der Aufbau der erfindungsgemäßen Folie wie eine Luftkissenfolie, wobei jedoch die "Luftkissen" mit Latentwärmespeichermaterialien gefüllt sind.

Für die im Rahmen der Anmeldung gewünschten Anwendungsbereiche eignen sich Schmelzbereiche (Bereich des Flüssig-/Festphasenübergangs der Latentwärmespeichermaterialien) zwischen 21 und 28°C, noch mehr bevorzugt zwischen 23 und 25°C. Für gewisse Anwendungen kann es sinnvoll sein, dass die Folie an einer oder beiden Seiten verspiegelt ist, beispielsweise durch Auftrag von Metallschichten, um eine Strahlungsreflexion zu ermöglichen.

In einer bevorzugten Ausführungsform handelt es sich bei der erfindungsgemäßen Folie um eine lichtdurchlässige bzw. transparente Folie.

Die erfindungsgemäße Folie ist besonders geeignet zur Abdeckung von landwirtschaftlichen Flächen oder Pflanzen. Tagsüber, während der Sonneneinstrahlung, werden die Folien aufgeheizt und bewirken dabei ein Schmelzen der Latentwärmespeicher. Nachts, bei tieferen Temperaturen, wie sie beispielsweise im Frühjahr oder Herbst auftreten, erstarren die Latentwärmespeichermaterialien und geben ihre Wärme an die Umgebung ab, um die Pflanzen zu schützen.

Auf diesem Wege können auch z.B. Schwimmbäder oder Swimmingpools an einer Auskühlung nachts teilweise gehindert werden.

Die erfindungsgemäßen Folien lassen sich beispielsweise jedoch auch unter Putz in Fassadenbereichen anwenden, wobei sie nach der Montage überputzt werden können. Auf diese Weise kann der Taupunkt des Fassade angehoben werden.

Weitere Anwendungsmöglichkeiten wären für eine Kühldecke, wobei die Folie mit der üblichen Kapillarrohrmatte an einer Decke befestigt wird und dann überputzt werden kann.

Weitere Anwendungsmöglichkeiten ergeben sich beim Einbau einer abgehängten Decke. Hierzu könnte die Folie beispielsweise mit einer üblichen Lochplatte (Akustikpatte) auf der einen Seite kaschiert werden und dann an einer abgehängten Decke montiert werden. Eine solche abgehängte Decke wäre in der Lage, an heißen Tage Wärme aufzunehmen und damit den Raum zu kühlen und zu kühleren Zeiten die entsprechende Wärme wieder abzugeben.

Die Erfindung wird durch die nachfolgenden Beispiele näher erläutert.

Folien können nach den gängigen Verfahren durch Extrusion oder KO-Extrusion hergestellt werden. Dabei werden die mikroverkapselten Latentwärmespeicher direkt der Kunststoffschmelze zugegeben, unmittelbar vor dem Extrusionsprozess.

Die Folie wird nach Extrusion in einem Wasserbad gekühlt.

Im Fall der KO-Extrusion kann eine Folie mit Ausstülpungen versehen werden, die mit den entsprechend verflüssigten Latentwärmespeichermaterialien gefüllt werden.

Anschließend wird die zweite Folienlage ko-extrudiert, wobei die mit Latentwärmespeicher gefüllte erste Lage abgeschlossen wird.

## Patentansprüche

1. Folie enthaltend Bereiche von Latentwärmespeichermaterialien in einer Menge von 1 bis 40 Gew. %.

2. Folie nach Anspruch 1, **dadurch gekennzeichnet, dass** die Latentwärmespeichermaterialien ausgewählt sind aus aliphatischen Kohlenwasserstoffverbindungen, aromatischen Kohlenwasserstoffverbindungen, gesättigten oder ungesättigten Fettsäuren, gesättigten oder ungesättigten Fettalkoholen, gesättigten oder ungesättigten Ester, Wachsen, halogenierten Kohlenwasserstoffverbindungen und Mischungen davon..

3. Folie nach Anspruch 1 oder 2, **dadurch gekennzeichnet, dass** die Latentwärmespeichermaterialien verkapselt sind.

4. Folie nach Anspruch 3, **dadurch gekennzeichnet, dass** die Kapselgröße im Bereich von 1 bis 5000 µm, bevorzugt im Bereich von 5 bis 10 µm liegt.

5. Folie nach Anspruch 4, **dadurch gekennzeichnet, dass** die Folie umhüllte Bereiche aufweist, die mikroverkapselte Latentwärmespeichermaterialien enthält.

6. Folie nach mindestens einem der Ansprüche 1 bis 5, **dadurch gekennzeichnet, dass** die Folie mindestens zwei Schichten umfasst und die Bereiche von Latentwärmespeichermaterialien zwischen den Schichten liegt.

7. Folie nach mindestens einem der Ansprüche 1 bis 6, **dadurch gekennzeichnet, dass** die Folie eine Dicke von 8 bis 80 µm aufweist.

8. Folie nach mindestens einem der Ansprüche 1 bis 7, **dadurch gekennzeichnet, dass** das Folienmaterial ausgewählt wird aus Polyolefin, Polyvinylchlorid, Polyamid und Polyvinylacetate.

9. Folie nach mindestens einem der Ansprüche 1 bis 8, **dadurch gekennzeichnet, dass** der Schmelzbereich der Latentwärmespeichermaterialien zwischen 21°C und 28°C, bevorzugt zwischen 23°C und 25°C liegt.

10. Folie nach mindestens einem der Ansprüche 1 bis 9, **dadurch gekennzeichnet, dass** die Folie an einer oder beiden Oberflächen verspiegelt ist.

11. Verwendung einer Folie nach mindestens einem der Ansprüche 1 bis 10 zur Abdeckung von landwirtschaftlichen Flächen, Pflanzen, Schwimmbädern, Swimming-pools.

12. Verwendung einer Folie nach mindestens einem der Ansprüche 1 bis 10 als Untergrund für einen Außenputz oder für Außenfassaden sowie als Untergrund für Innenputze oder vorgehängte Wandelemente oder in Kombination mit abgehängten Decken, Innenputz für Wände, Decken.
